# EUROPÄISCHE PATENTANMELDUNG

(11) **EP 4 390 364 A1**
(43) Veröffentlichungstag der Anmeldung: **26.06.2024**
(21) Anmeldenummer: 23216842.7
(22) Anmeldetag: 14.12.2023
(51) Int. Cl.: G01N 3/56

(54) **VORRICHTUNG ZUR PRÜFUNG DER ABRIEBFESTIGKEIT EINES MIT FARBE BEDRUCKTEN KÖRPERS**

(30) Priorität: 21.12.2022 DE 202022107138 U
(71) Anmelder: All4Labels Group GmbH, 22969 Witzhave (DE)
(72) Erfinder: Praß, Andreas, 48599 Gronau-Epe (DE)
(74) Vertreter: RGTH

(57) **Zusammenfassung**

Vorrichtung zur Prüfung der Abriebfestigkeit eines mit Farbe bedruckten Körpers, bei der ein federbelasteter Körper längsverschiebbar in einer topfförmigen Hülse angeordnet ist, aus deren offenen Ende ein Stempel mit einer ebenen Anlagefläche herausragt, der Teil des federbelasteten Körpers ist.

## Beschreibung

Die Erfindung betrifft eine Vorrichtung zur Prüfung der Abriebfestigkeit eines mit Farbe bedruckten Körpers, der beispielsweise aus einem bedruckten Blatt oder ausgestanzten Etikett oder auch einer Verpackung bestehen kann. Der Körper kann aus Karton, Papier, oder ein- oder mehrlagigen Folien bestehen, die selbst aus Kunststoff und/oder Metall gefertigt sind, oder aus sonstigen laminierten Körpern bestehen.

Die hier in Rede stehenden Farben sind Druckfarben oder Lackschichten bis hin zu Primern oder Laminationsklebern, die bei Druckprozessen auf den zu bedruckenden Körper aufgetragen werden. Ein maßgebliches Ziel beim Bedrucken der Körper besteht darin, dass die Farben optimal trocknen und härten, bevor der bedruckte Körper der weiteren Verarbeitung oder Verwendung zugeführt wird. Die Trocknung der Farben kann physikalisch und/oder chemisch erfolgen, wobei zur physikalischen Trocknung die Verdampfung von Lösungsmitteln oder das Wegschlagen bzw. Penetrieren von Lösungsmitteln in das bedruckte Substrat erfolgen kann. Die chemische Trocknung kann beispielsweise durch eine Vernetzung erfolgen. Gleichgültig, ob die Trocknung mit Trocknungsvorrichtungen wie z.B. IR-Strahlern, UV-Strahlern, Warmluft, Mikrowellen oder Laser erfolgt ist es bei allen Druckverfahren wie Tiefdruckverfahren, Flexodruck, Offsetdruck oder Digitaldruckverfahren und Tintenstrahldruckverfahren entscheidend, dass die Farbe abriebfest auf dem Körper anhaftet. Primär wird der Abriebtest bei UV reaktiven Farben verwendet, wo er Rückschlüsse zur Vernetzung der Farben und Lacke erlaubt.

Soweit nicht Erfahrungswerte beim Drucken zugrunde gelegt werden können, wird häufig der sog. Daumenschmiertest angewendet, bei dem die Bedienungsperson seinen Daumen auf ein frisch bedrucktes Material setzt und unter Druck dreht. Ein Drucktest gilt als bestanden, wenn keine Farbe am Daumen zurückbleibt. Der Nachteil dieses Verfahrens besteht darin, dass je nach appliziertem Druck die Prüfung unzureichend ist und zudem bei negativem Testergebnis der Daumen mit Farbe kontaminiert wird. Nachteilig ist schließlich, dass je nach Daumendruck subjektiv unterschiedliche Testparameter gewählt werden, so dass die manuellen Daumenschmiertests nicht immer korrekt sind.

Es ist Aufgabe der vorliegenden Erfindung eine Vorrichtung zu schaffen, mit der die Tests unter gleichen Bedingungen, d.h. klar definierten Verfahrensparametern zuverlässige Ergebnisse liefern.

Diese Aufgabe wird mit der Vorrichtung nach Anspruch 1 gelöst. Erfindungsgemäß ist ein federbelasteter Körper längsverschiebbar in einer topfförmigen Hülse angeordnet, aus deren offenem Ende ein Stempel mit einer ebenen Anlagenfläche herausragt, der Teil des federbelasteten Körpers ist. Die Anlagefläche ist die Testfläche, die um ein vorbestimmtes Maß gegen den Druck einer Feder auf das zu untersuchende bedruckte Blatt oder dem bedruckten Körper gelegt und anschließend (ähnlich wie beim Daumenschmiertest) um 180° gedreht werden kann. Auf der Stempel-Anlagefläche kann vorzugsweise ein Testpapier ablösbar aufgeklebt werden, das bei jedem neuen Test erneuert wird, um stets gleiche Testvoraussetzungen zu schaffen.

Vorzugsweise sind die Hülse oder der Stempel zylinderförmig. Nach einer weiteren Ausgestaltung der Erfindung ist der Körper verliersicher in der Hülse angeordnet.

Ein Ausführungsbeispiel der Erfindung ist in den Zeichnungen dargestellt. Es zeigen:
- Fig. 1a-c: den federbelasteten Körper in einer Seitenansicht sowie zwei Schrägansichten,

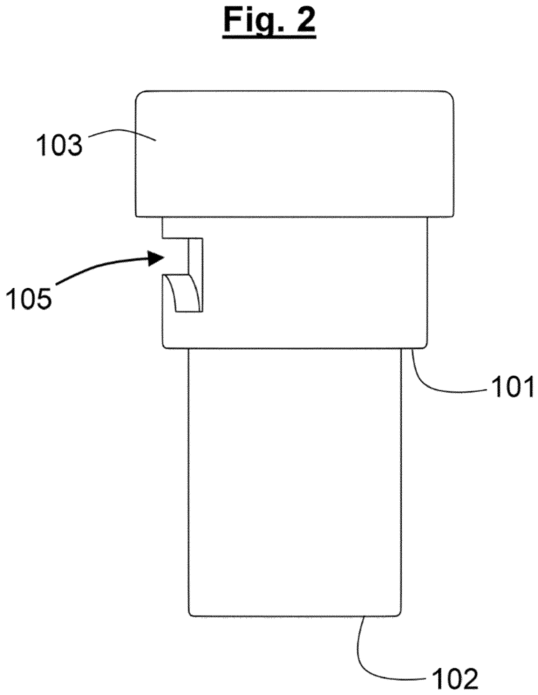

- Fig. 2: eine Seitenansicht des Körpers nach Fig. 1a-c ohne Feder,
- Fig. 3a-c: eine Hülse in einer Seitenansicht sowie zwei Schrägansichten und

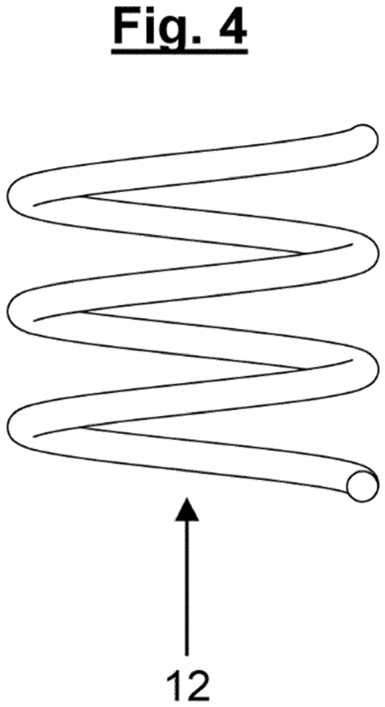

- Fig. 4: eine Seitenansicht der Feder.

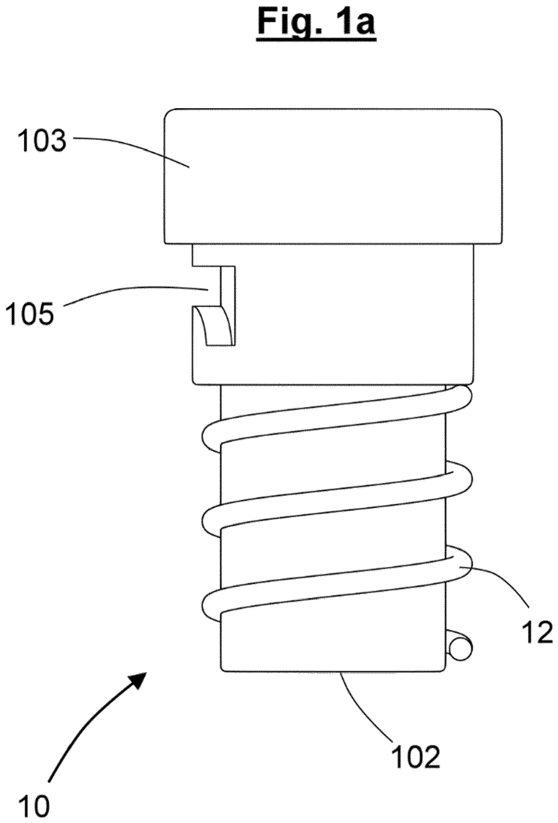

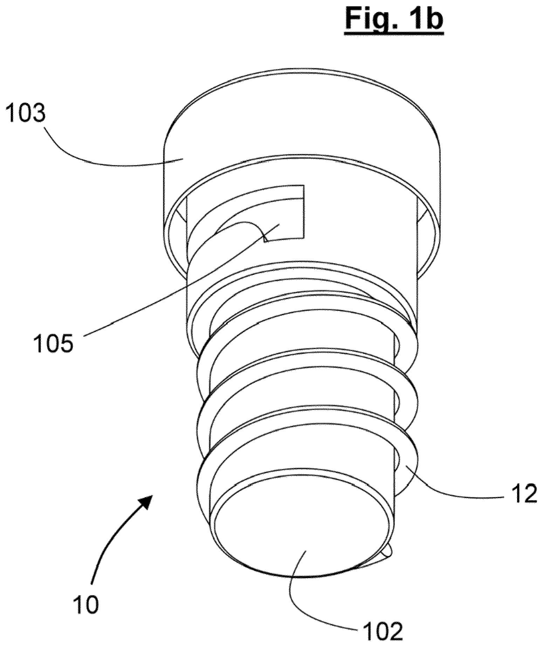

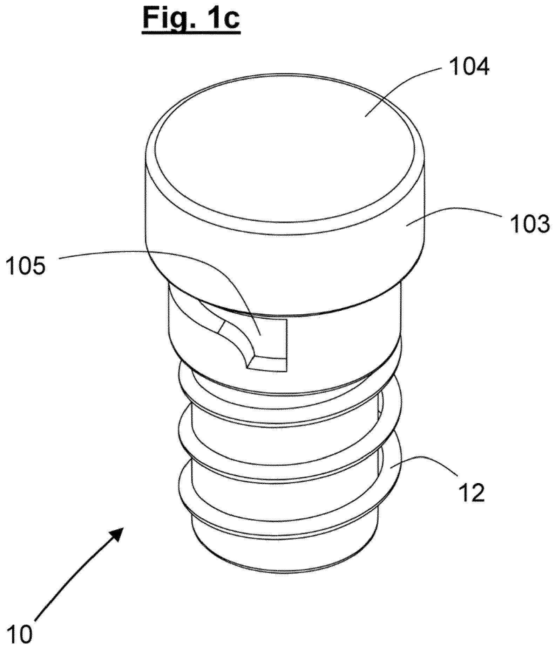

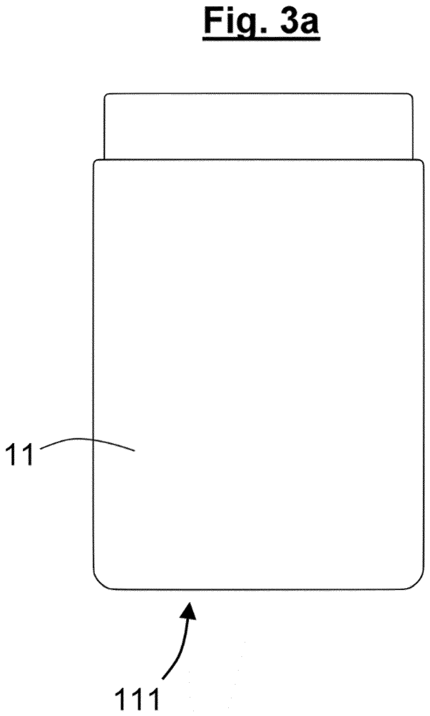

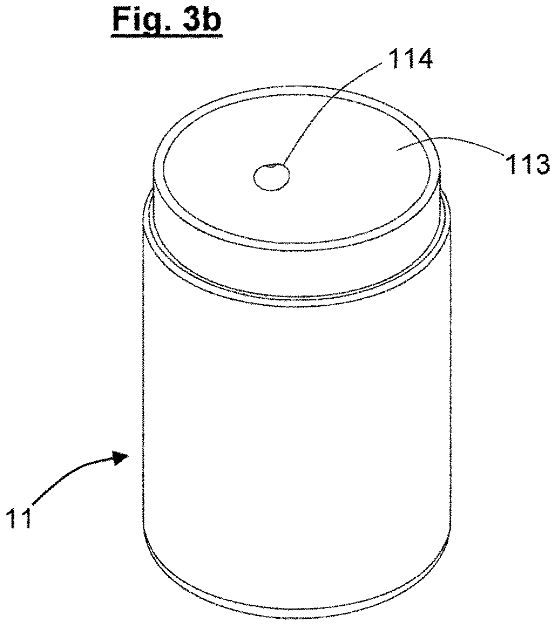

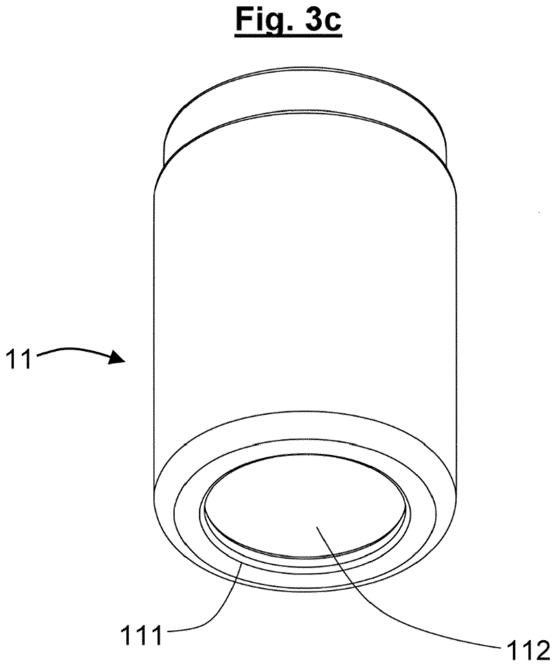

Aus Fig. 1a-c ist ein federbelasteter Körper 10 ersichtlich, der in einer topfförmigen Hülse 11 (siehe Fig. 3a-c) verliersicher und längsbeweglich angeordnet ist. Die jeweilige relative Lage des federbelasteten Körpers 10 wird durch das Maß bestimmt, mit dem der federbelastete Körper 10 gegen den Druck der Spiralfeder 12 in Richtung des Bodens 111 der Hülse 11 gedrückt wird. Der jeweilige Federweg, den der federbelastete Körper 10 zurücklegen kann, wird durch die Federspannung einerseits sowie den Anschlag 101 bestimmt. Der Boden 111 ist ringförmig ausgebildet und besitzt eine innere Querschnittsöffnung 112, die gleichgroß dem Querschnitt des unteren Teils 102 des federbelasteten Körpers ist. Am oberen Ende des federbelasteten Körpers 10 ist ein Stempel 103 angeordnet, der eine Anlagefläche 104 besitzt, die mit einem dort aufgeklebten Teststreifen die Schmiertestfläche bildet. Der Körper 10 weist ferner eine seitliche Führung 105 auf, die mit einer Wölbung am Innenmantel der Hülse 11 korrespondiert. Diese Führung 105 erstreckt sich über 180° und besitzt an den Anschlagenden nach unten gerichtete Aussparungen als Rastpositionen. Diese Führung 105 bestimmt auch zusammen mit der Feder 12 den Hubweg des Körpers 10 relativ zur Hülse 11. Durch Drehung um 180° um die Längsachse des federbelasteten Körpers 10 wird der manuelle Daumenschmiertest reproduzierbar mit stets gleichen Testparametern durchgeführt.

Die Hülse 11 und der Körper 10 können voneinander getrennt werden, indem die genannte Wölbung durch ein Labyrinth am Ende der Zwangsführung 105 geführt wird. Der Deckel 113 der Hülse 11 besitzt zudem eine zentral angeordnete Durchbrechung 114, die zur Aufnahme eines (nicht dargestellten) Führungsstiftes dienen kann.

Der Vorteil der Testvorrichtung besteht insbesondere in einem einfachen Aufbau und der leichten Handhabung.

## Patentansprüche

1. Vorrichtung zur Prüfung der Abriebfestigkeit eines mit Farbe bedruckten Körpers,
**dadurch gekennzeichnet, dass**
ein federbelasteter Körper (10) längsverschiebbar in einer topfförmigen Hülse (11) angeordnet ist, aus deren offenen Ende ein Stempel (103) mit einer ebenen um 180° drehbar um die Längsachse angeordneten Anlagefläche (104) herausragt, der Teil des federbelasteten Körpers (10) ist, und dass der Körper (10) ferner eine seitliche Führung (105) aufweist, die mit einer Wölbung am Innenmantel der Hülse (11) korrespondiert und die sich über 180° erstreckt.

2. Vorrichtung nach Anspruch 1, **dadurch gekennzeichnet, dass** die Hülse (11) und der Stempel (103) zylinderförmig sind.

3. Vorrichtung nach Anspruch 1 oder 2, **dadurch gekennzeichnet, dass** der Körper (10) verliersicher in der Hülse (11) angeordnet ist.
